# EUROPEAN PATENT APPLICATION

(11) **EP 4 850 798 A1**
(43) Date of publication of application: **09.12.2026**
(21) Application number: 26176748.7
(22) Date of filing: 06.05.2026
(51) Int. Cl.: B01F 23/10, B01F 23/213, B01F 25/314, B01F 25/431, B01F 35/71, F16K 3/08, B01F 25/00

(54) **VALVE AND MIXER ASSEMBLY FOR ENGINE SYSTEM**

(30) Priority: 30.05.2025 US 202519223113
(71) Applicant: Caterpillar, Inc., Peoria, IL 61629-6450 (US)
(72) Inventor: PARASHAR, Tarun, 600042 Chennai (IN); NEUHOFF, Brandon, Dunlap, 61525 (US)
(74) Representative: Boult Wade Tennant LLP

(57) **Abstract**

A valve and mixer assembly (200) for treating exhaust gases flowing through a conduit (108) of an engine system (100) includes a mixer plate (202) disposed within the conduit (108). The mixer plate (202) defines a first axial end (204) and a second axial end (206) opposite the first axial end (204). The mixer plate (202) includes a mixer body (208) defining a plurality of first through-openings (210). The mixer plate (202) also includes a plurality of blades (212) disposed axially adjacent to the mixer body (208) and coupled to the mixer body (208). The valve and mixer assembly (200) also includes a valve plate (214) coupled to the mixer plate (202) and disposed at the first axial end (204) of the mixer plate (202). The valve plate (214) is rotatable relative to the mixer plate (202) to selectively allow the exhaust gases to flow through the valve and mixer assembly (200). The valve plate (214) includes a valve body (216). The valve body (216) defines a plurality of second through-openings (218).

## Description

### Technical Field

The present disclosure generally relates to engine system and, more particularly, a valve and mixer assembly for treating exhaust gases flowing through a conduit of the engine system, and a method of treating exhaust gases flowing through the conduit of the engine system.

### Background

An engine system includes an engine, such as an internal combustion engine, to generate operating power. In order to comply with emission regulation standards, the engine system includes an aftertreatment system that is disposed downstream of the engine. The aftertreatment system removes and/or controls particulate matter, gaseous emissions constituents, and the like that may be present in exhaust gases exiting the engine before the exhaust gases are let into atmosphere.

The aftertreatment system includes a backpressure valve (BPV) and a diesel exhaust fluid (DEF) injector that injects a reductant or DEF to treat the exhaust gases. The BPV and the DEF injector are disposed between a turbocharger of the engine system and the aftertreatment system. During an operation, the BPV may selectively allow the exhaust gases to flow therethrough, after which the DEF injector injects the DEF.

Further, a mixer assembly is disposed downstream of the BPV to impart a swirling motion to the exhaust gases for improved mixing of the DEF with the exhaust gases. Conventionally, the mixer assembly in the aftertreatment system includes a pair of mixer plates that are spaced apart from each other, resulting in a significant space requirement after the BPV. Specifically, a length of a conduit that houses the DEF injector and the mixer plates needs to be significantly long to accommodate the mixer plates, which increases a space requirement of the engine system.

U.S. Patent Number 9,341,099 describes an emissions cleaning module includes a flow conduit having an upstream end fluidly connected to a source of exhaust fluid and a downstream end fluidly connected to a mixer module. An injector module has an outlet orientated to inject injection fluid into the flow conduit upstream the mixer module. A low pressure cavity downstream the injector module outlet is fluidly connected to the flow conduit or the mixer module by an open mouth orientated such that a flow of exhaust fluid along the flow conduit flows over the open mouth creating a pressure reduction within the low pressure cavity.

### Summary of the Disclosure

In an aspect of the present disclosure, a valve and mixer assembly for treating exhaust gases flowing through a conduit of an engine system is provided. The valve and mixer assembly includes a mixer plate disposed within the conduit. The mixer plate defines a first axial end and a second axial end opposite the first axial end. The mixer plate includes a mixer body defining a plurality of first through-openings. The mixer plate also includes a plurality of blades disposed axially adjacent to the mixer body and coupled to the mixer body. The valve and mixer assembly also includes a valve plate coupled to the mixer plate and disposed at the first axial end of the mixer plate. The valve plate is rotatable relative to the mixer plate to selectively allow the exhaust gases to flow through the valve and mixer assembly. The valve plate includes a valve body. The valve body defines a plurality of second through-openings.

In another aspect of the present disclosure, an engine system is provided. The engine system includes a turbocharger. The engine system also includes an aftertreatment system adapted to receive exhaust gases from the turbocharger. The engine system further includes a conduit fluidly connecting the turbocharger and the aftertreatment system to allow the exhaust gases to flow from the turbocharger to the aftertreatment system. The engine system includes a valve and mixer assembly disposed within the conduit for treating the exhaust gases flowing through the conduit. The valve and mixer assembly includes a mixer plate disposed within the conduit. The mixer plate defines a first axial end and a second axial end opposite the first axial end. The mixer plate includes a mixer body defining a plurality of first through-openings. The mixer plate also includes a plurality of blades disposed axially adjacent to the mixer body and coupled to the mixer body. The valve and mixer assembly also includes a valve plate coupled to the mixer plate and disposed at the first axial end of the mixer plate. The valve plate is rotatable relative to the mixer plate to selectively allow the exhaust gases to flow through the valve and mixer assembly. The valve plate includes a valve body. The valve body defines a plurality of second through-openings.

In yet another aspect of the present disclosure, a method of treating exhaust gases flowing through a conduit of an engine system is provided. The method includes providing a mixer plate of a valve and mixer assembly. The mixer plate is disposed within the conduit. The mixer plate defines a first axial end and a second axial end opposite the first axial end. The mixer plate includes a mixer body defining a plurality of first through-openings, and a plurality of blades disposed axially adjacent to the mixer body and coupled to the mixer body. The method also includes providing a valve plate of the valve and mixer assembly. The valve plate is coupled to the mixer plate and disposed at the first axial end of the mixer plate. The valve plate includes a valve body. The valve body defines a plurality of second through-openings. The method further includes rotating the valve plate relative to the mixer plate to selectively allow the exhaust gases to flow through the valve and mixer assembly. The method includes imparting, via the plurality of blades of the mixer plate, a swirling motion to the exhaust gases while the exhaust gases flow through the mixer plate.

Other features and aspects of this disclosure will be apparent from the following description and the accompanying drawings.

### Brief Description of the Drawings

FIG. 1 is a schematic block diagram of an engine system, according to an example of the present disclosure;
FIG. 2 is a schematic cross-sectional view of a portion of the engine system of FIG. 1 including a conduit and a valve and mixer assembly, according to an example of the present disclosure;
FIG. 3 is a schematic cross-sectional view of the valve and mixer assembly of FIG. 2;
FIGS. 4A and 4B are schematic perspective views of a mixer plate of the valve and mixer assembly of FIG. 3;
FIG. 5 is a schematic perspective view of a valve plate of the valve and mixer assembly of FIG. 3;
FIG. 6 is a schematic cross-sectional view of the valve and mixer assembly of FIG. 3;
FIG. 7A is a schematic view of the valve plate of FIG. 5 in a first state;
FIG. 7B is a schematic view of the valve plate of FIG. 5 in a second state;
FIG. 8 is a flowchart of a method of treating exhaust gases flowing through the conduit of the engine system, according to an example of the present disclosure.

### Detailed Description

Wherever possible, the same reference numbers will be used throughout the drawings to refer to the same or like parts.

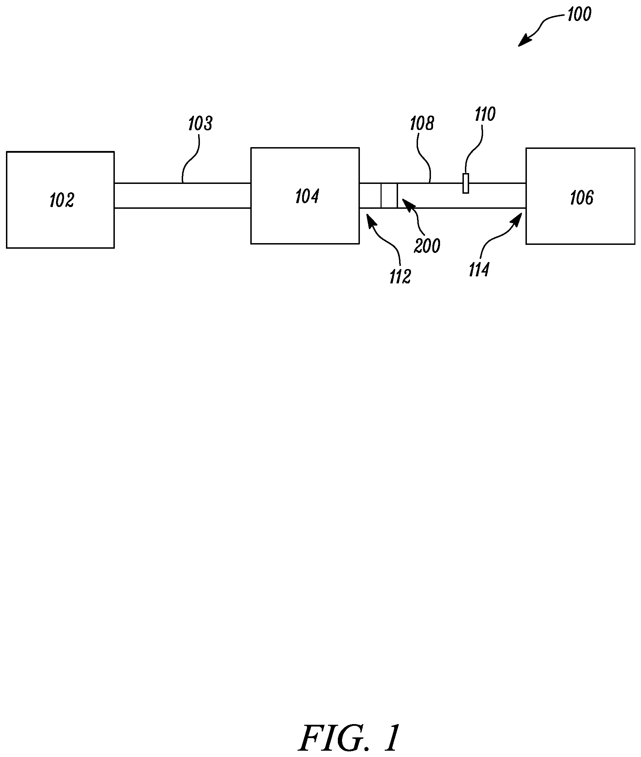

FIG. 1 is a schematic block diagram of an engine system 100, according to an example of the present disclosure. The engine system 100 may be used in a variety of machines (not shown) including, but not limited to, mobile machines (such as, mining or construction machines), stationary machines, and like. The engine system 100 includes an engine 102. The engine 102 may be any type of engine, such as, an internal combustion engine, may be of any size, with any number of cylinders, any type of combustion chamber, such as, cylindrical, rotary spark ignition, compression ignition, 4-stroke and 2-stroke, etc., and in any configuration, such as, "V," in-line, radial, etc.

The engine 102 may include a number of components (not shown), such as, a crankshaft, a fuel system, an inlet manifold, an intake port, an exhaust port, and the like. Further, the engine 102 includes a number of cylinders that define one or more combustion chambers (not shown). Moreover, exhaust gases generated based on combustion of fuels in the combustion chambers are directed towards an exhaust manifold of the engine 102. The exhaust manifold may be in fluid communication with the cylinders. It should be noted that the exhaust gases exiting the engine 102 may include particulate matter and/or gaseous emissions constituents, such as, carbon monoxide (CO), ammonia, and oxides of nitrogen (NOx), such as, nitric oxide (NO), nitrous oxide (N₂O), and nitrogen dioxide (NO₂).

The engine system 100 also includes a turbocharger 104. The turbocharger 104 is in fluid communication with the exhaust manifold via an exhaust line 103. The turbocharger 104 may include one or more turbines (not shown) and one or more compressors (not shown) coupled with the one or more turbines. The exhaust gases that are produced during the operation of the engine 102 are supplied to the one or more turbines. The exhaust gases drive the turbine that in turn drives the compressor.

The engine system 100 further includes an aftertreatment system 106. The aftertreatment system 106 receives the exhaust gases from the turbocharger 104. The aftertreatment system 106 includes one or more diesel oxidation catalysts (DOC), one or more particulate filters (DPF), one or more selective catalytic reduction modules (SCR), and a diesel exhaust fluid (DEF) injector. Upon receiving the exhaust gases from the turbocharger 104, the aftertreatment system 106 may remove and/or control particulate matter for example NOx that may be present in the exhaust gases before the exhaust gases are let into atmosphere.

The engine system 100 includes a conduit 108 fluidly connecting the turbocharger 104 and the aftertreatment system 106 to allow the exhaust gases to flow from the turbocharger 104 to the aftertreatment system 106. The conduit 108 defines a first end 112 and a second end 114 opposite the first end 112. The first end 112 is fluidly coupled with the turbocharger 104 and the second end 114 is fluidly coupled with the aftertreatment system 106. The first end 112 is embodied as an inlet end and the second end 114 is embodied as an outlet end. Specifically, the conduit 108 allows the exhaust gases to flow from the first end 112 to the second end 114. In some examples, the conduit 108 may be made of a metallic material, a polymeric material, an alloy, or a combination thereof. The conduit 108 may be made of any material that may have high temperature resistant properties and/or corrosion resistant properties.

The engine system 100 further includes a DEF injector 110. The DEF injector 110 may be at least partially disposed inside the conduit 108 proximal to the second end 114 of the conduit 108. The DEF injector 110 injects the DEF in the conduit 108. In some examples, the DEF may include, but is not limited to, urea, ammonia, and a water/urea solution.

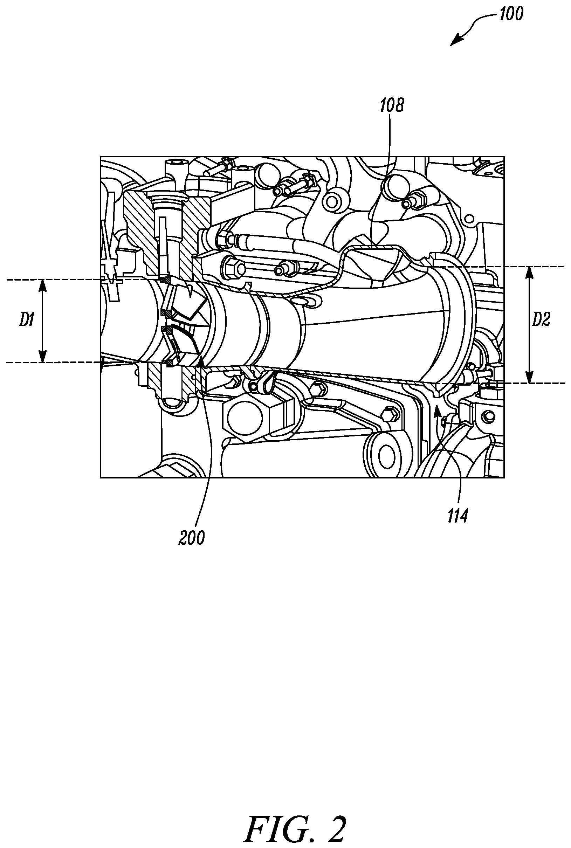

Referring to FIG. 2, a schematic cross-sectional view of a portion of the engine system 100 of FIG. 1 is illustrated. The engine system 100 includes a valve and mixer assembly 200 disposed within the conduit 108 for treating the exhaust gases flowing through the conduit 108 of the engine system 100. Particularly, the valve and mixer assembly 200 is disposed proximal to the first end 112 (see FIG. 1) of the conduit 108. Although, in the present disclosure, the valve and mixer assembly 200 is disposed within the conduit 108 that fluidly connects the turbocharger 104 (see FIG. 1) of the engine system 100 with the aftertreatment system 106 (see FIG. 1) of the engine system 100, it may be contemplated that the valve and mixer assembly 200 may be used in any other application that dictates the requirement of a back pressure valve and a mixer assembly.

The conduit 108 may have a variable cross-section. As is apparent from FIG. 2, the conduit 108 may define a first inner diameter D1 at the first end 112 and a second inner diameter D2 at the second end 114. The first inner diameter D1 is smaller than the second inner diameter D2. Alternatively, the first inner diameter D1 may be greater than the second inner diameter D2. In other examples, the conduit 108 may have a uniform cross-section.

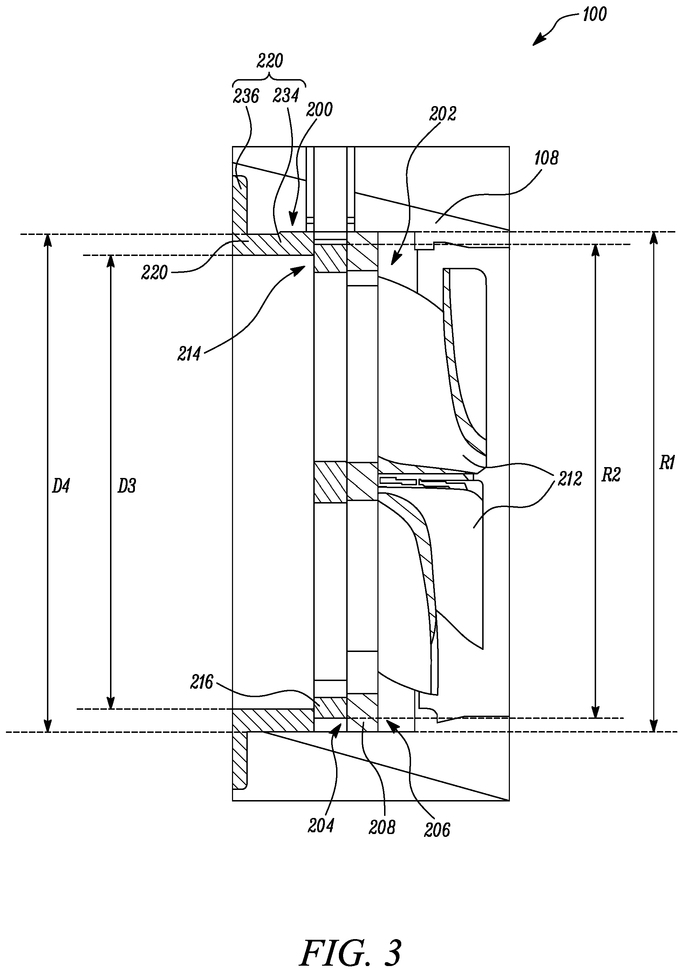

Referring to FIG. 3, a schematic cross-sectional view of the valve and mixer assembly 200 is illustrated. The valve and mixer assembly 200 includes a mixer plate 202 disposed within the conduit 108. The mixer plate 202 defines a first axial end 204 and a second axial end 206 opposite the first axial end 204. The mixer plate 202 may be fixedly coupled inside the conduit 108 for example, by an interference fit. The mixer plate 202 defines a first diameter R1. The first diameter R1 is an outer diameter of the mixer plate 202. The first diameter R1 may be equal to the first inner diameter D1 (see FIG. 2) of the conduit 108 such that the mixer plate 202 forms the interference fit with the conduit 108. In some examples, the mixer plate 202 may be made of a metallic material, a polymeric material, an alloy, or a combination thereof. In an example, the mixer plate 202 is made of steel. In other examples, the mixer plate 202 may be made of any material that may have high temperature resistant properties and/or corrosion resistant properties.

The valve and mixer assembly 200 also includes a valve plate 214 coupled to the mixer plate 202 and disposed at the first axial end 204 of the mixer plate 202. The valve plate 214 performs the function of a back pressure valve, which will be described later in this disclosure. The valve plate 214 is rotatable relative to the mixer plate 202 to selectively allow the exhaust gases to flow through the valve and mixer assembly 200. In some examples, the valve plate 214 is coupled with the mixer plate 202 through a shaft and bearing assembly (not shown).

The valve plate 214 defines a second diameter R2. The second diameter R2 is an outer diameter of the valve plate 214. The second diameter R2 is smaller than the first diameter R1 of the mixer plate 202 and the first inner diameter D1 of the conduit 108. However, the second diameter R2 of the valve plate 214 may be equal to or greater than the first diameter R1 and the first inner diameter D1. In some examples, the valve plate 214 may be made of a metallic material, a polymeric material, an alloy, or a combination thereof. In an example, the valve plate 214 is made of steel. In other examples, the valve plate 214 may be made of any material that may have high temperature resistant properties and/or corrosion resistant properties.

The valve and mixer assembly 200 further includes a holder 220 disposed adjacent to the valve plate 214. The holder 220 supports the valve plate 214 and the mixer plate 202 within the conduit 108. The holder 220 may have a cup shaped profile. The holder 220 has an annular design. The holder 220 may be fixedly coupled inside the conduit 108 for example, by an interference fit. Specifically, the holder 220 includes a first portion 234 and a second portion 236 extending from the first portion 234. The first portion 234 of the holder 220 defines an inner diameter D3 and an outer diameter D4. The outer diameter D4 may be equal to the first inner diameter D1 (see FIG. 2) of the conduit 108 such that the holder 220 forms the interference fit with the conduit 108. Further, the outer diameter D4 of the holder 220 is greater than the second diameter R2 of the valve plate 214. Furthermore, the outer diameter D4 of the holder 220 is equal to the first diameter R1 of the mixer plate 202. Alternatively, the outer diameter D4 of the holder 220 may be greater than the first diameter R1 of the mixer plate 202. Moreover, the inner diameter D3 of the holder 220 is smaller than the first diameter R1 of the mixer plate 202. In some examples, the holder 220 may be made of a metallic material, a polymeric material, an alloy, or a combination thereof. In an example, the holder 220 is made of steel. In other examples, the holder 220 may be made of any material that may have high temperature resistant properties and/or corrosion resistant properties.

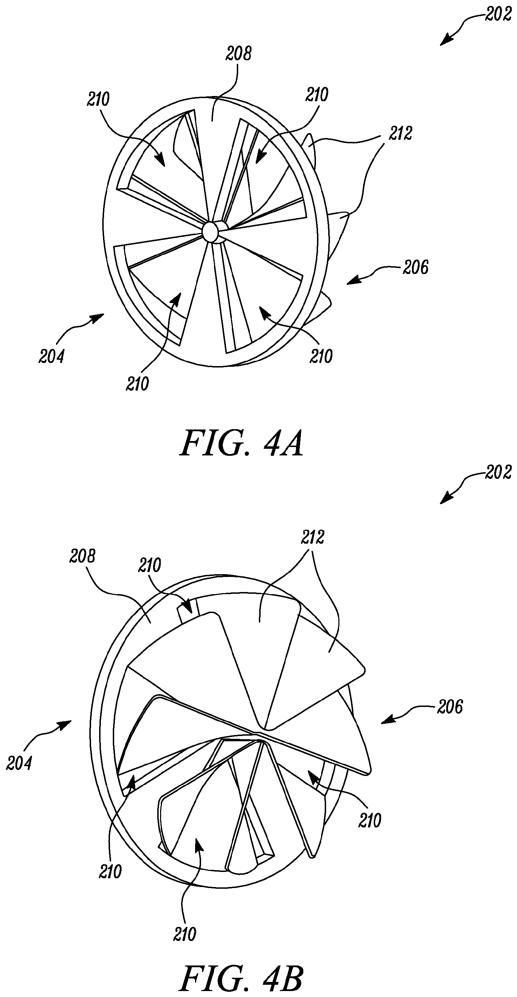

Referring now to FIGS. 4A and 4B, different schematic perspective views of the mixer plate 202 of the valve and mixer assembly 200 of FIG. 3 are illustrated. The mixer plate 202 includes a mixer body 208 defining a number of first through-openings 210. In the illustrated example of FIGS. 4A and 4B, the mixer body 208 defines four first through-openings 210. Alternatively, the mixer body 208 may define any number of first through-openings 210 as per application attributes. In the illustrated example of FIGS. 4A and 4B, each of the number of first through-openings 210 is triangular in shape. Alternatively, each of the number of first through-openings 210 may have any other shape such as, but not limited to, rectangular, circular, trapezoidal, and the like.

The mixer plate 202 further includes a number of blades 212 disposed axially adjacent to the mixer body 208 and coupled to the mixer body 208. In the illustrated example of FIGS. 4A and 4B, the mixer plate 202 includes eight blades 212. However, the mixer plate 202 may include any number of blades 212 as per application attributes. Each blade 212 from the number of blades 212 has a curved profile. In some examples, the blades 212 may be fixedly coupled to the mixer body 208 for example, via welding, soldering, brazing, and the like. In other examples, the blades 212 may be removably coupled to the mixer body 208 via one or more fastening elements.

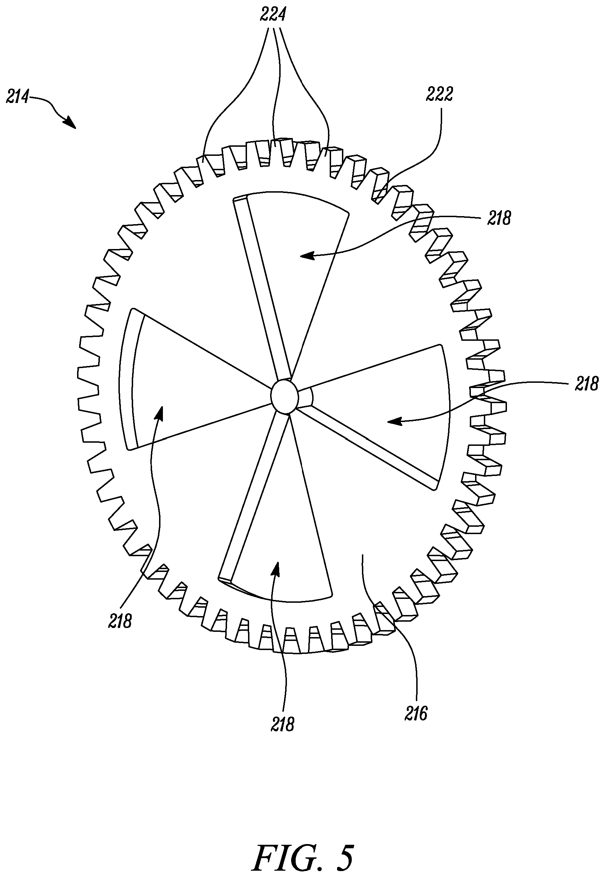

Referring to FIG. 5, a schematic perspective view of the valve plate 214 of the valve and mixer assembly 200 of FIG. 3 is illustrated. The valve plate 214 includes a valve body 216. The valve body 216 defines a number of second through-openings 218. In the illustrated example of FIG. 5, the valve body 216 defines four second through-openings 218. Alternatively, the valve body 216 may define any number of second through-openings 218 as per application attributes.

The number of second through-openings 218 is equal to the number of first through-openings 210 (see FIGS. 4A and 4B). In the illustrated example of FIG. 5, each of the number of second through-openings 218 is triangular in shape. Alternatively, the number of second through-openings 218 may have any other shape such as, but not limited to, rectangular, circular, trapezoidal, and the like. In some examples, a size of each of the number of first through-openings 210 may be similar to a size of each of the number of second through-openings 218. In some other examples, the size of each of the number of first through-openings 210 may be different than the size of each of the number of second through-openings 218.

The valve body 216 defines a circumferential surface 222. The valve body 216 includes a number of teeth 224 extending from the circumferential surface 222. The teeth 224 extend radially outwards from the circumferential surface 222.

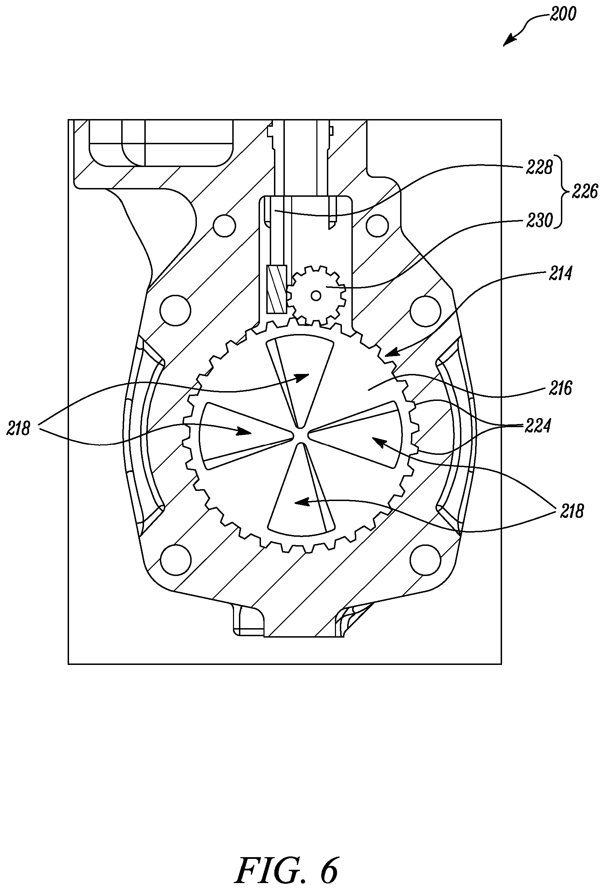

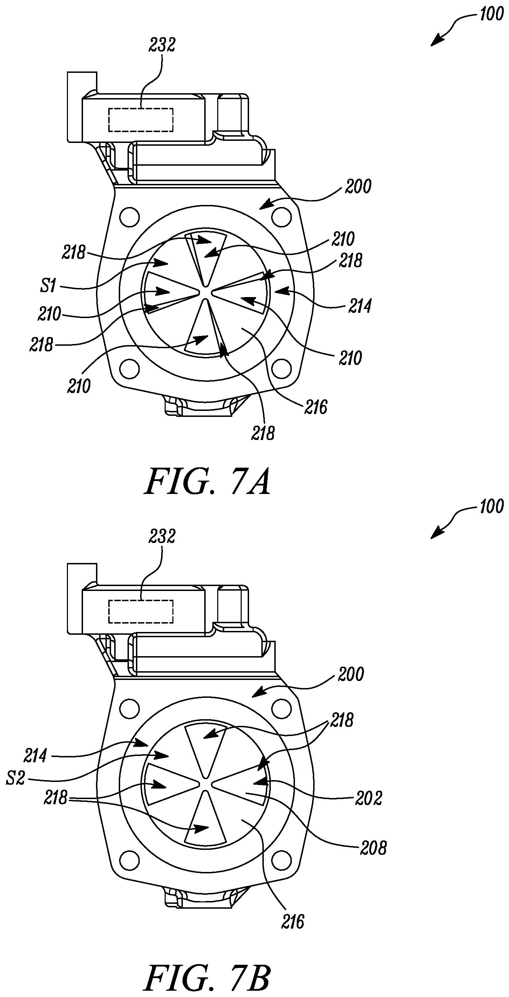

Referring to FIG. 6, a schematic cross-sectional view of the valve and mixer assembly 200 of FIG. 3 is illustrated. The valve and mixer assembly 200 further includes a gear mechanism 226. The gear mechanism 226 engages with the valve body 216. The valve and mixer assembly 200 further includes an actuator 232 (schematically shown in FIGS. 7A and 7B) in engagement with the gear mechanism 226. The actuator 232 rotates the valve plate 214 relative to the mixer plate 202 (see FIG. 3) via the gear mechanism 226. In some examples, the actuator 232 may include a motor, a linear actuator, a hydraulic cylinder, a pneumatic actuator, a servo, a linkage assembly, and the like, without any limitations. Further, the actuator 232 is communicably coupled with an electronic control unit (ECU) (not shown) associated with the engine system 100 (see FIG. 1), such that upon receiving a signal from the ECU, the actuator 232 rotates the valve plate 214 relative to the mixer plate 202.

Further, in the illustrated example of FIG. 6, the gear mechanism 226 includes a shaft 228 coupled with the actuator 232. The gear mechanism 226 also includes a gear 230 that engages with the valve body 216 to rotate the valve plate 214 relative to the mixer plate 202. Particularly, the gear 230 meshes with each of the shaft 228 and the number of teeth 224 of the valve body 216 to rotate the valve plate 214 relative to the mixer plate 202. It should be noted that the gear mechanism 226 may be replaced by any other component or combination of components that causes the rotation of the valve plate 214. Further, the valve plate 214 is rotatable between a first state S1 (see FIG. 7A) and a second state S2 (see FIG. 7B).

FIG. 7A illustrates a schematic view of the valve plate 214 in the first state S1. In the first state S1 of the valve plate 214, each of the number of second through-openings 218 in the valve body 216 aligns with a corresponding first through-opening 210 from the number of first through-openings 210 in the mixer body 208 (see FIGS. 4A and 4B) to allow the exhaust gases to flow through the valve and mixer assembly 200. Further, when the valve plate 214 is in the first state S1, the number of blades 212 (see FIGS. 4A and 4B) of the mixer plate 202 (see FIGS. 4A and 4B) impart a swirling motion to the exhaust gases flowing through the mixer plate 202.

In an example, upon receiving the signal from the ECU, the actuator 232 may cause the shaft 228 (see FIG. 6) to mesh with the gear 230 (see FIG. 6). As the gear 230 meshes with the number of teeth 224 (see FIG. 6) of the valve body 216, the gear 230 rotates the valve plate 214 and disposes the valve plate 214 in the first state S1. The rotation of the valve plate 214 may cause the number of second through-openings 218 in the valve body 216 to align with the corresponding first through-opening 210 in the mixer body 208, thereby allowing the exhaust gases to flow through the valve and mixer assembly 200. As the exhaust gases are allowed to flow through the valve plate 214 based on the alignment of the first and second through-openings 210, 218, the exhaust gases come in contact with the blades 212 of the mixer plate 202 that impart the swirling motion to the exhaust gases. Specifically, as the blades 212 of the mixer plate 202 have the curved profile, the blades 212 impart the swirling motion to the exhaust gases. The exhaust gases may then mix with the DEF injected by the DEF injector 110 (see FIG. 1) downstream of the valve and mixer assembly 200.

FIG. 7B illustrates a schematic view of the valve plate 214 in the second state S2. In the second state S2 of the valve plate 214, each of the number of second through-openings 218 in the valve body 216 is misaligned relative to the corresponding first through-opening 210 from the number of first through-openings 210 in the mixer body 208 to minimize a flow of the exhaust gases through the valve and mixer assembly 200. It should be noted that, in the second state S2, the valve plate 214 may be disposed such that each second through-opening 218 is completely misaligned relative to the corresponding first through-opening 210 (see FIGS. 4A and 4B) or the valve plate 214 may be disposed such that each second through-opening 218 is partially misaligned relative to the corresponding first through-opening 210.

In an example, upon receiving the signal from the ECU, the actuator 232 may cause the shaft 228 (see FIG. 6) to mesh with the gear 230 (see FIG. 6). As the gear 230 meshes with the number of teeth 224 (see FIG. 6) of the valve body 216, the gear 230 rotates the valve plate 214 and disposes the valve plate 214 in the second state S2. The rotation of the valve plate 214 may cause the number of second through-openings 218 in the valve body 216 to misalign relative to the corresponding first through-opening 210 in the mixer body 208, thereby preventing the exhaust gases to flow through the valve and mixer assembly 200. As in the second state S2 of the valve plate 214, the valve and mixer assembly 200 prevents the exhaust gases to flow therethrough, a temperature of the exhaust gases may increase due to a back pressure generated by the valve and mixer assembly 200. An increase in the temperature of the exhaust gases may improve the removal of particulate matter, gaseous emissions constituents, and the like from the exhaust gases when the exhaust gases flow downstream of the valve and mixer assembly 200.

It is to be understood that individual features shown or described for one embodiment may be combined with individual features shown or described for another embodiment. The above-described implementation does not in any way limit the scope of the present disclosure. Therefore, it is to be understood although some features are shown or described to illustrate the use of the present disclosure in the context of functional segments, such features may be omitted from the scope of the present disclosure without departing from the spirit of the present disclosure as defined in the appended claims.

### Industrial Applicability

The present disclosure relates to the valve and mixer assembly 200 that includes the mixer plate 202 and the valve plate 214 coupled to the mixer plate 202. The valve plate 214 performs the function of the back pressure valve, whereas the mixer plate 202 causes mixing/turbulence of the exhaust gases. Each of the valve plate 214 and the mixer plate 202 are integrated into a single assembly, which may reduce an overall length of the conduit 108 of the valve and mixer assembly 200. Further, the valve and mixer assembly 200 described herein may have a compact design. For example, the overall length of the mixer plate 202 may be reduced to 50 millimeters (mm), which may in turn cause the engine system 100 to have a compact design. The improved design of the valve and mixer assembly 200 may save packaging space that is otherwise required for conventional mixing assemblies.

The mixer plate 202 includes the number of blades 212 that imparts the swirling motion to the exhaust gases flowing through the mixer plate 202. The swirling motion imparted by the blades 212 on the exhaust gases may enhance the mixing efficiency of the exhaust gases with the DEF, thereby reducing an amount of particulate matter and/or gaseous emissions constituents, for example NOx, present in the exhaust gases. Thus, the valve and mixer assembly 200 may improve an efficiency of removal of the particulate matter and/or gaseous emissions constituents, thereby allowing improved adherence to emission regulations. Further, the swirling motion imparted by the blades 212 to the exhaust gases may prevent impingement of the DEF on walls of the conduit 108. Further, the valve and mixer assembly 200 may promote uniform mixing of exhaust gases with the DEF. The uniform mixture of exhaust gases and the DEF may then flow towards the aftertreatment system 106 which may further reduce/eliminate a concentration of the particulate matter and/or gaseous emissions constituents in the exhaust gases, before the exhaust gases are let into atmosphere.

Overall, the valve and mixer assembly 200 may be simple in construction, may be cost-effective, and may be durable. Further, the valve and mixer assembly 200 may be retrofitted on existing engine systems and may be easy to install. Moreover, the valve and mixer assembly 200 may be used by a variety of vehicles and/or work machines.

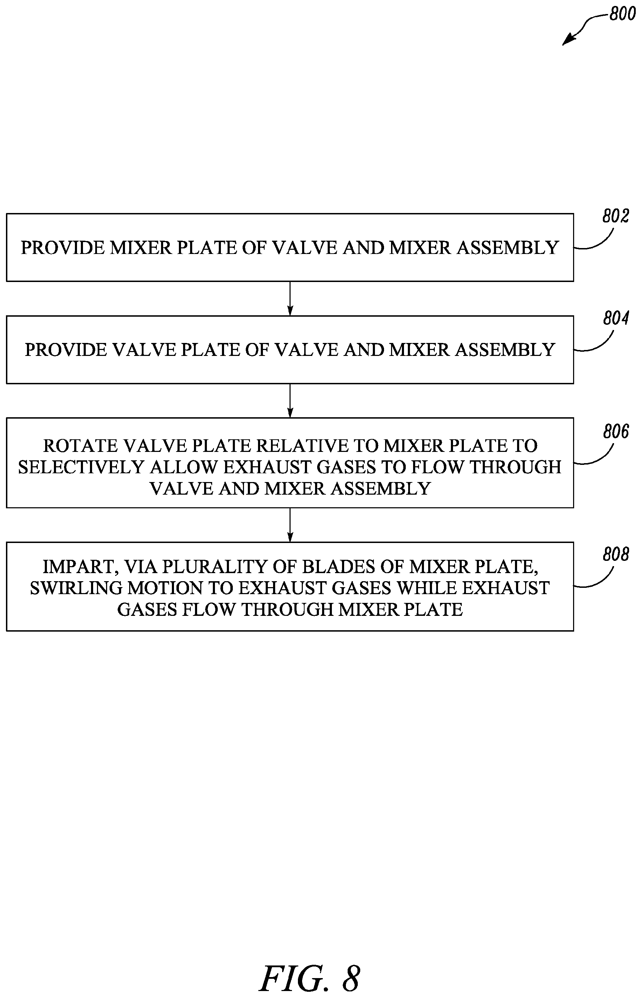

FIG. 8 is a flowchart of a method 800 of treating the exhaust gases flowing through the conduit 108 of the engine system 100. With reference to FIGS. 1 to 8, at step 802, the mixer plate 202 of the valve and mixer assembly 200 is provided. The mixer plate 202 is disposed within the conduit 108. The mixer plate 202 defines the first axial end 204 and the second axial end 206 opposite the first axial end 204. The mixer plate 202 includes the mixer body 208 defining the number of first through-openings 210. The mixer plate 202 also includes the number of blades 212 disposed axially adjacent to the mixer body 208 and coupled to the mixer body 208.

At step 804, the valve plate 214 of the valve and mixer assembly 200 is provided. The valve plate 214 is coupled to the mixer plate 202 and disposed at the first axial end 204 of the mixer plate 202. The valve plate 214 includes the valve body 216. The valve body 216 defines the number of second through-openings 218.

At step 806, the valve plate 214 is rotated relative to the mixer plate 202 to selectively allow the exhaust gases to flow through the valve and mixer assembly 200. The valve and mixer assembly 200 includes the gear mechanism 226. The gear mechanism 226 engages with the valve body 216. The valve and mixer assembly 200 further includes the actuator 232 in engagement with the gear mechanism 226. The step 806 also includes a step (not shown) at which the actuator 232 is actuated to rotate the valve plate 214 relative to the mixer plate 202 via the gear mechanism 226.

The step 806 includes a step (not shown) at which the valve plate 214 is rotated by the gear mechanism 226 to dispose the valve plate 214 in the first state S1. The step 806 also includes a step (not shown) at which each of the number of second through-openings 218 in the valve body 216 is aligned with the corresponding first through-opening 210 from the number of first through-openings 210 in the mixer body 208 to allow the exhaust gases to flow through the valve and mixer assembly 200.

The step 806 includes a step (not shown) at which the valve plate 214 is rotated by the gear mechanism 226 to dispose the valve plate 214 in the second state S2. The step 806 also includes a step (not shown) at which each of the number of second through-openings 218 in the valve body 216 is misaligned relative to the corresponding first through-opening 210 from the number of first through-openings 210 in the mixer body 208 to minimize the flow of the exhaust gases through the valve and mixer assembly 200.

At step 808, the swirling motion is imparted to the exhaust gases via the number of blades 212 of the mixer plate 202 while the exhaust gases flow through the mixer plate 202.

It should be noted that the steps 802, 804, 806, 808 of the method 800 may be performed in a sequence that is different from that explained in relation to FIG. 8. Further, various steps 802, 804, 806, 808 can be performed together.

While aspects of the present disclosure have been particularly shown and described with reference to the embodiments above, it will be understood by those skilled in the art that various additional embodiments may be contemplated by the modification of the disclosed work machine, systems and methods without departing from the spirit and scope of the disclosure. Such embodiments should be understood to fall within the scope of the present disclosure as determined based upon the claims and any equivalents thereof.

## Claims

1. A valve and mixer assembly (200) for treating exhaust gases flowing through a conduit (108) of an engine system (100), the valve and mixer assembly (200) comprising:
a mixer plate (202) disposed within the conduit (108), wherein the mixer plate (202) defines a first axial end (204) and a second axial end (206) opposite the first axial end (204), and wherein the mixer plate (202) comprises:
a mixer body (208) defining a plurality of first through-openings (210); and
a plurality of blades (212) disposed axially adjacent to the mixer body (208) and coupled to the mixer body (208); and
a valve plate (214) coupled to the mixer plate (202) and disposed at the first axial end (204) of the mixer plate (202), wherein the valve plate (214) is rotatable relative to the mixer plate (202) to selectively allow the exhaust gases to flow through the valve and mixer assembly (200), wherein the valve plate (214) comprises a valve body (216), and wherein the valve body (216) defines a plurality of second through-openings (218).

2. The valve and mixer assembly (200) of claim 1, wherein the valve body (216) defines a circumferential surface (222), and wherein the valve body (216) comprises a plurality of teeth (224) extending from the circumferential surface (222).

3. The valve and mixer assembly (200) of claim 1, further comprising:
a gear mechanism (226) adapted to engage with the valve body (216); and
an actuator (232) in engagement with the gear mechanism (226), wherein the actuator (232) is adapted to rotate the valve plate (214) relative to the mixer plate (202) via the gear mechanism (226).

4. The valve and mixer assembly (200) of claim 3, wherein the gear mechanism (226) comprises a shaft (228) coupled with the actuator (232), and a gear (230) that engages with the valve body (216) to rotate the valve plate (214) relative to the mixer plate (202).

5. The valve and mixer assembly (200) of claim 1, wherein the valve plate (214) is rotatable between a first state (S1) and a second state (S2), wherein, in the first state (S1) of the valve plate (214), each of the plurality of second through-openings (218) in the valve body (216) aligns with a corresponding first through-opening (210) from the plurality of first through-openings (210) in the mixer body (208) to allow the exhaust gases to flow through the valve and mixer assembly (200), and wherein, in the second state (S2) of the valve plate (214), each of the plurality of second through-openings (218) in the valve body (216) is misaligned relative to the corresponding first through-opening (210) from the plurality of first through-openings (210) in the mixer body (208) to minimize a flow of the exhaust gases through the valve and mixer assembly (200).

6. The valve and mixer assembly (200) of claim 5, wherein, when the valve plate (214) is in the first state (S1), the plurality of blades (212) of the mixer plate (202) are adapted to impart a swirling motion to the exhaust gases flowing through the mixer plate (202).

7. The valve and mixer assembly (200) of claim 1, wherein each of the plurality of first through-openings (210) and the plurality of second through-openings (218) is triangular in shape.

8. The valve and mixer assembly (200) of claim 1, further comprising a holder (220) disposed adjacent to the valve plate (214), wherein the holder (220) is adapted to support the valve plate (214) and the mixer plate (202) within the conduit (108).

9. The valve and mixer assembly (200) of claim 1, wherein the mixer plate (202) and the valve plate (214) are disposed within the conduit (108) that fluidly connects a turbocharger (104) of the engine system (100) with an aftertreatment system (106) of the engine system (100).
